# EUROPEAN PATENT APPLICATION

(11) **EP 2 685 210 A2**
(43) Date of publication of application: **15.01.2014**
(21) Application number: 13175202.4
(22) Date of filing: 05.07.2013
(51) Int. Cl.: G01C 19/5712

(54) **Class ii coriolis vibratory rocking mode gyroscope with central fixed post**

(30) Priority: 13.07.2012 US 201213549012
(71) Applicant: Northrop Grumman Guidance and Electronics Company, Inc., Woodland Hills, CA 91367-6675 (US)
(72) Inventor: Stewart, Robert E., Woodland Hills, CA California 91364 (US); Bulatowicz, Michael D., Canoga Park, CA California 91304 (US)
(74) Representative: Curley, Donnacha John

(57) **Abstract**

A resonator gyroscope includes a central post; a resonator coupled to the central post; and a diaphragm coupled to the resonator, wherein at least one of the diaphragm and the central post accommodates rotation of the resonator in an axis in a plane of the diaphragm.

## Description

### BACKGROUND

The invention relates generally to a resonator gyroscope and more particularly to a rocking mode gyroscope that is a Class II Coriolis Vibratory Gyroscope.

A Class II Coriolis Vibratory Gyroscope (CVG) is a sensor that gives information about the angular rate of rotation about the gyroscope's input axis when operating in a rate measuring closed-loop mode, and that gives information about angular displacement when operating in a whole-angle open-loop mode of operation.

CVGs are subdivided into Class I and Class II gyroscopes. An example of a Class I CVG is the tuning fork gyroscope. An example of a Class II CVG is the bell or hemispheric resonator gyroscope. Class II CVGs are geometrically symmetrical about their input axis and have degenerate or nearly identical resonant frequencies for vibration in the principal elastic axes.

A Coriolis acceleration is used by vibratory gyroscopes to sense rotation. Coriolis acceleration is proportional to the cross product of the angular rate of rotation about the input axis and the velocity of the resonator along an axis orthogonal to the input axis. For many applications, vibratory gyroscopes can be very small and can be batch fabricated in large numbers using Micromachined Electro-Mechanical Systems (MEMS) technology.

In Class II CVG vibratory gyroscopes operating in closed-loop mode, the polarity of the gyroscope's scale factor is reversed when the drive and sense axes are interchanged while the polarities of the gyroscope's rate bias and quadrature rate error remain unchanged. This characteristic of Class II CVGs allows self-calibration of the gyroscope's bias and quadrature rate errors.

The rocking mode gyro described herein is not counterbalanced. Counterbalancing the current design could be accomplished with the addition of at least a second resonator. Macroscopic scale CVGs have substantially reduced life cycle costs and have increased shock resistance. CVGs have low output noise and large dynamic range when operating in whole angle, open-loop mode and are suitable to demanding applications such as space satellites.

### SUMMARY

In one set of embodiments, a resonator gyroscope includes a central post; a resonator coupled to the central post; and a diaphragm coupled to the resonator, wherein at least one of the central post and the diaphragm accommodates motion of the resonator in an axis in a plane of the diaphragm.

According to another set of embodiments, a resonator gyroscope includes a central post; a generally cylindrical resonator coupled to the central post; a diaphragm coupled to the resonator; a first forcer component that causes a first oscillation of the resonator; a first pickoff component that senses the amplitude of the first oscillation in an axis in a plane of the diaphragm, wherein a second oscillation is induced in the resonator by a Coriolis force on the resonator, wherein the second oscillation is substantially orthogonal to the first oscillation; a second forcer component that causes the second oscillation to be substantially nulled; and a second pickoff component that senses the amplitude of the second oscillation.

According to yet another set of embodiments, a resonator gyroscope includes a case comprising at least one of a top cover and a bottom cover; a central post fixed to the case; a generally cylindrical resonator coupled to the central post, wherein the resonator is enclosed in the case; a diaphragm that couples the resonator to the central post, wherein at least one of the top cover and the bottom cover comprises eight electrodes that are approximately equally spaced, wherein at least one of the electrodes is coupled to control electronics configured to drive the resonator in a rocking mode, wherein the control electronics is further configured to substantially null the amplitude of a sense mode orthogonal to the rocking mode; wherein the diaphragm accommodates vibration of the resonator in an axis in a plane of the diaphragm.

The application is to be taken to extend to the following numbered statements which may be used as a basis for claims in this application or a divisional thereof.
1. A resonator gyroscope, comprising:
   a central post;
   a resonator coupled to the central post; and
   a diaphragm coupled to the resonator,
   wherein at least one of the central post and the diaphragm accommodates motion of the resonator in an axis in a plane of the diaphragm.
2. The gyroscope of statement 1, wherein the resonator is generally cylindrical.
3. The gyroscope of statement 1, wherein the diaphragm couples the resonator to the central post.
4. The gyroscope of statement 3, wherein the diaphragm is elastic.
5. The gyroscope of statement 1, wherein the central post is elastic and fixed to a case.
6. The gyroscope of statement 5, wherein the case comprises at least one of a top cover and a bottom cover.
7. The gyroscope of statement 6, wherein one or more electrodes are comprised in at least one of the top cover and the bottom cover.
8. The gyroscope of statement 7, wherein at least one of the electrodes is coupled to control electronics.
9. The gyroscope of statement 7, wherein the electrodes are approximately equally spaced around at least one of the top cover and the bottom over.
10. The gyroscope of statement 7, wherein at least one of the one or more electrodes are dielectrically isolated.
11. The gyroscope of statement 7, wherein at least one of the one or more electrodes faces an end surface of the resonator.
12. The gyroscope of statement 7, wherein at least one of the electrodes comprises at least one of a tuning electrode, a pickoff electrode and a forcer electrode.
13. The gyroscope of statement 12, wherein the tuning electrodes alternate around at least one of the top cover and the bottom cover.
14. The gyroscope of statement 12, wherein at least one of the top cover and the bottom cover comprises four forcer electrodes.
15. The gyroscope of statement 12, wherein at least one forcer electrode diametrically opposes a pickoff electrode.
16. The gyroscope of statement 15, wherein at least one of the pickoff electrodes is coupled to control electronics.
17. The gyroscope of statement 16, wherein the control electronics, using information provided by the at least one pickoff electrode to which it is coupled, drives the resonator in a rocking mode.
18. The gyroscope of statement 17, wherein the control electronics, using the information provided by the at least one pickoff electrode to which it is coupled, provides feedback to at least one of the forcer electrodes to drive the resonator in a rocking mode at an approximate rocking mode resonant frequency.
19. The gyroscope of statement 18, wherein the control electronics, using electrostatic force and the information provided by the at least one pickoff electrode to which it is coupled, provides feedback to at least one of the forcer electrodes to drive the resonator in a rocking mode at an approximate rocking mode resonant frequency and specific amplitude.
20. The gyroscope of statement 19, wherein the resonator is driven at approximately the resonator's fundamental rocking mode resonant frequency.
21. The gyroscope of statement 19, wherein the resonator is drive at an approximate harmonic of the fundamental rocking mode resonant frequency.
22. The resonator of statement 19, wherein the resonator is driven at an approximate sub-harmonic of the fundamental rocking mode resonant frequency.
23. The gyroscope of statement 1, wherein the gyroscope is operated in closed-loop mode.
24. The gyroscope of statement 16, wherein the control electronics comprises one or more of a drive frequency phase lock loop (PLL), a drive amplitude control loop, a quadrature control loop, and an angular rate control loop.
25. The gyroscope of statement 12, wherein at least one of the top cover and the bottom cover comprises four pickoff electrodes.
26. The gyroscope of statement 25, wherein at least one of the pickoff electrodes senses at least one of a phase, a direction, and amplitude of oscillation of the resonator.
27. The gyroscope of statement 12, wherein at least one of the pickoff electrodes is coupled to control electronics.
28. The gyroscope of statement 27, wherein at least one of the pickoff electrodes coupled to the control electronics provides the servo with at least one of a phase, a direction, and amplitude of oscillation of the resonator.
29. The gyroscope of statement 28, wherein the control electronics, using electrostatic force and information provided by the at least one pickoff electrode to which it is coupled, substantially nulls the amplitude of a sense mode orthogonal to the driven rocking mode.
30. The gyroscope of statement 29, wherein the at least one pickoff electrode receives a pickoff signal that the control electronics divides into sine and cosine components with relation to the phase of the drive axis.
31. The gyroscope of statement 30, wherein the sine and cosine components are used to substantially null both the angular rate and the quadrature motions of the resonator, thereby substantially nulling the amplitude of the sense mode.
32. The gyroscope of statement 1, wherein the central post flexes in approximate synchronization with the resonator.
33. The gyroscope of statement 1, wherein the gyroscope is capable of self-calibration.
34. The gyroscope of statement 5, wherein the diaphragm is coupled to the case through the center post.
35. The gyroscope of statement 1, wherein the gyroscope may be operated in open loop mode.
36. The gyroscope of statement 1, wherein the gyroscope may be operated in closed loop mode.
37. A resonator gyroscope, comprising:
   A central post;
   a generally cylindrical resonator coupled to the central post;
   a diaphragm coupled to the resonator;
   a first forcer component that causes a first oscillation of the resonator;
   a first pickoff component that senses a second oscillation in an axis in the plane of the diaphragm, wherein the second oscillation is induced in the resonator by a Coriolis force on the resonator,
   wherein the second oscillation is substantially orthogonal to the first oscillation;
   a second forcer component that causes the second oscillation to be substantially nulled; and
   a second pickoff component that senses the amplitude of the second oscillation.
38. The apparatus of statement 37, wherein the pickoff component senses the second oscillation to measure the amplitude of the oscillating resonator.
39. The apparatus of statement 37, wherein the first oscillation comprises a drive oscillation in a drive direction, and
   wherein the second oscillation comprises a Coriolis force-induced oscillation in a sense direction.
40. The apparatus of statement 37, wherein the first forcer component measures at least one of an amplitude of oscillation and a phase of oscillation, wherein the first pickoff component substantially nulls the amplitude of the second oscillation.
41. A resonator gyroscope, comprising:
   a case comprising at least one of a top cover and a bottom cover;
   an elastic central post fixed to the case;
   a generally cylindrical resonator coupled to the central post, wherein the resonator is enclosed in the case;
   a diaphragm that couples the resonator to the central post,
      wherein at least one of the top cover and the bottom cover comprises eight electrodes that are approximately equally spaced, wherein at least one of the electrodes is coupled to control electronics configured to drive the resonator in a rocking mode, wherein the control electronics is further configured to substantially null the amplitude of a sense mode orthogonal to the rocking mode,
      wherein the central post and diaphragm accommodates motion of the resonator in an axis in a plane of the diaphragm.

### DESCRIPTION OF THE DRAWINGS

The accompanying drawings provide visual representations which will be used to more fully describe various representative embodiments and can be used by those skilled in the art to better understand the representative embodiments disclosed herein and their advantages. In these drawings, like reference numerals identify corresponding elements.

FIGURE 1 is a cutaway exploded view of one implementation of a Class II Coriolis vibratory rocking mode gyroscope.

FIGURE 2 is a view of a cross section along the drive axis of one implementation of a Class II Coriolis vibratory rocking mode gyroscope.

FIGURE 3 is a view of a cross section along the sense axis of one implementation of a Class II Coriolis vibratory rocking mode gyroscope.

FIGURE 4 is a simplified block diagram of the closed-loop control electronics for the rocking mode gyroscope.

### DETAILED DESCRIPTION

While the present invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described. In the following description and in the several figures of the drawings, like reference numerals are used to describe the same, similar or corresponding parts in the several views of the drawings.

Gyroscopes can be divided into two categories depending on the principle of operation. In the first category are Coriolis-based gyroscopes, which sense angular rate by measuring the force acting on a sensing body moving in a rotating frame with a velocity component normal to the input axis. The motion of the sensing body may be either continuous as in a spinning wheel or vibratory as in a tuning fork or bell. In the second category are Sagnac-based gyroscopes, which sense angular rate by measuring the difference due to the constant velocity of light in the transit time of counter-propagating light signals. This relativistic effect results in the splitting of the frequency of the counter-propagating light signals in ring laser gyroscopes or a phase difference the counter-propagating light signals in fiber optic gyroscopes.

Coriolis Vibratory Gyroscopes (CVGs) are further subdivided into Class I gyroscopes and Class II gyroscopes. An example of a Class I CVG is the tuning fork gyroscope. An example of a Class II CVG is the bell or hemispheric resonator gyroscope. Class II CVGs are geometrically symmetrical about their input axis and have degenerate, or nearly identical, resonant frequencies for the vibration along the principal elastic axes.

The gyroscope comprises control electronics. The control electronics controls the resonant oscillation of the sensing element at approximately its natural resonant frequency and controls the amplitude of the oscillation.

The gyroscope can be operated closed-loop or open-loop. In the open-loop case, as the gyroscope rotates, the orientation of the drive axis will come to lag the case. Closed-loop and open-loop modes address this phenomenon in different ways.

When the gyroscope operates in the closed-loop mode, a force rebalance servo loop comprised in the gyroscope control electronics introduces a restoring force to null the motion of the resonator in the sense axis. The sense axis pickoff signal is divided into sine and cosine components with relation to the phase of the drive axis. These components are used to null both the angular rate and the quadrature motions of the resonator, thereby substantially nulling coupled vibration in the sense axis. The servo loop amplifies, modulates and feeds back a control signal to enabled coupled vibration in the orthogonal direction to be substantially nulled by enabling forcer electrodes to provide an appropriate amplitude, frequency and phase of vibration so as to substantially null coupled vibration in the sense axis. A second servo loop known as the drive frequency phase lock loop (PLL) control loop approximately maintains the resonator's natural resonant frequency and amplitude.

In open-loop operation, the gyroscope is allowed to operate off its null position as it responds to the input angular rates. In open-loop mode, the relative motion of the resonator relative to the case is tracked as the resonator is parametrically driven at the resonant frequency. The amplitude and frequency of the drive signals are adjusted by appropriate feedback along the two axes.

The drive axis is orthogonal to the sense axis along which the sensing of the rate of angular rotation occurs. Both the drive axis and the sense axis are orthogonal to the input axis.

The force rebalance signal of a CVG is an alternating voltage that can be divided into two components. The first component is in phase with the velocity of the vibrating resonator and has an amplitude proportional to the input angular rate. The second component is in phase with the displacement of the resonator and is ninety degrees out of phase, or in quadrature, with the first component. The magnitudes of the in-phase angular rate signal and the quadrature signal are derived by demodulation of the gyroscope pickoff output when the gyroscope is run in an open-loop mode, or by the amplitudes of the sine and cosine phases of the feedback for closed loop operation. The phase is determined with respect to the drive signal for the resonator. Phase errors in demodulation for open loop gyros, or in re-modulation for closed loop gyros, cause a portion of the quadrature signal to be interpreted as angular rate and contribute to the gyroscope bias error.

According to embodiments of the invention, the gyroscope includes a resonator that is supported by a diaphragm that couples the resonator to a central case-fixed elastic post. Preferably, the diaphragm comprises a diaphragm. Preferably, the diaphragm is elastic. The resonator is enclosed in a case with top and bottom covers that, according to embodiments of the invention, contain dielectrically isolated electrodes. According to embodiments of the invention, the electrodes face the end surfaces of the resonator and comprise capacitive pickoff electrodes and forcer electrodes. According to embodiments of the invention, at least one forcer electrode diametrically opposes a pickoff electrode. According to embodiments of the invention, at least one pickoff electrode diametrically opposes a forcer electrode. Thus, the resonator can be caused to oscillate at a frequency substantially equal to its fundamental natural frequency and at a fixed amplitude in an axis in a plane of the diaphragm using one set of pickoff and forcer electrodes. Accordingly, feedback is provided to the forcer components on the magnitude of the first oscillation, enabling regulation by the forcer components of the first oscillation.

According to embodiments of the invention, the use of the elastic diaphragm to couple the resonator to the elastic center post, combined with use of a resonator with an appropriately selected moment of inertia, may result in an enhanced signal-to-noise ratio (SNR). The larger pickoff capacitances also may contribute to the enhanced SNR according to embodiments of the invention. The larger forcer electrode capacitances also may contribute to an enhanced SNR according to embodiments of the invention. In addition, the rocking mode gyroscope can be fabricated using MEMS batch processing.

In response to rotation of the gyroscope about an axis parallel to the input axis of the resonator, the rocking motion of the resonator is coupled to rocking motion in an orthogonal axis in a plane of the diaphragm. This coupled rocking motion can be detected by the capacitive pickoffs.

Thus, in embodiments in which the gyroscope is operated in open-loop mode the measured signals of the pickoff electrodes can be proportional to an angular displacement. Alternatively, the pickoff of the orthogonal mode can provide a signal to the control electronics that is then transmitted to forcer electrodes and used by the forcer electrodes to substantially null the amplitude of the orthogonal mode using electrostatic force. The driven rocking mode frequency and the orthogonal mode frequency can be closely matched by applying voltages to the tuning electrodes to generate a negative electrostatic spring in an axis at approximately forty-five degrees to the drive and sense axis. The output signal of the gyroscope will then have substantially no quadrature component and will then be proportional to the angular rate of the gyroscope case.

According to embodiments of the invention, the Rocking Mode Gyroscope (RMG) is a Class II CVG, which allows it to be configured for self-calibration of gyroscope bias, quadrature and potentially for scale factor. According to embodiments of the invention, the RMG provides a miniature, low power, low cost gyroscope with bias stability and repeatability less than one degree per hour for tactical-grade inertial measurement units (IMU) and inertial navigation systems (INS).

According to embodiments of the invention, the RMG resonator is supported by a diaphragm coupled to a central, case-fixed post. According to embodiments of the invention, the resonator is coupled to the diaphragm. According to embodiments of the invention, the resonator is enclosed in a case with top and bottom covers containing dielectrically isolated electrodes. According to embodiments of the invention, these electrodes face the end surfaces of the resonator and form capacitive pickoff electrodes and forcer electrodes.

The gyroscope comprises forcer components coupled with the resonator so as to cause a first oscillation of the resonator. An angular rate having a component about the input axis of the resonator and the first oscillation induces a Coriolis force on the resonator. The Coriolis force causes a second oscillation of the resonator. The second oscillation is substantially orthogonal to the first oscillation. For example, the second oscillation occurs in the sense axis.

In response to rotation of the gyroscope about the input axis, the rocking motion of the resonator is coupled to motion in an orthogonal axis in a plane of the diaphragm. This coupled rocking motion can be detected by the capacitive pickoff electrodes. Thus, when the gyroscope is operated in the whole angle, open-loop mode, the resolved signals of the pickoff electrodes can be proportional to an angular displacement of the gyroscope. Alternatively, the pickoff of the orthogonal mode can provide a signal to the control electronics to substantially null the amplitude of the orthogonal mode using electrostatic force. The driven rocking mode frequency and the orthogonal mode frequency can be closely matched using voltages applied to the tuning electrodes. The electrostatic forcing signal can have substantially no quadrature component and then be proportional to the angular rate of the gyroscope. In both cases, embodiments can entail driven oscillation at approximately the fundamental rocking mode resonant frequency of the resonator, at approximate harmonics of the fundamental rocking mode resonant frequency, and at approximate sub-harmonics of the fundamental rocking mode resonant frequency.

The RMG employs a suspension that comprises the diaphragm and a robust center post. The RMG also employs a resonator with an appropriately selected moment of inertia so as to provide approximately the desired rocking mode frequency while having an out-of-plane translational resonant frequency at least approximately three to five times higher than the rocking mode frequency. However, the rocking mode and translational frequencies should not be approximate integer multiples as this can lead to damping effects, interference of the two modes with each other, and other undesirable results.

To initialize the gyroscope that comprises the resonator, forcer electrodes coupled with the resonator cause a first oscillation of the resonator. An angular rate of the resonator about the input axis induces a Coriolis force on the resonator. The Coriolis force causes a second oscillation of the resonator. The second oscillation is substantially orthogonal to the first oscillation. The second oscillation is in the sense axis 176 in the plane of the diaphragm. The first oscillation comprises a drive oscillation in a drive direction, and the second oscillation comprises a Coriolis force-induced oscillation in an orthogonal sense direction. A forcer component causes the first oscillation in the resonator and a pickoff component measures at least one of an amplitude of oscillation and a phase of oscillation. A pickoff component senses the second oscillation induced in the vibrating resonator by the Coriolis force on the resonator and a forcer component substantially nulls the amplitude of the second oscillation.

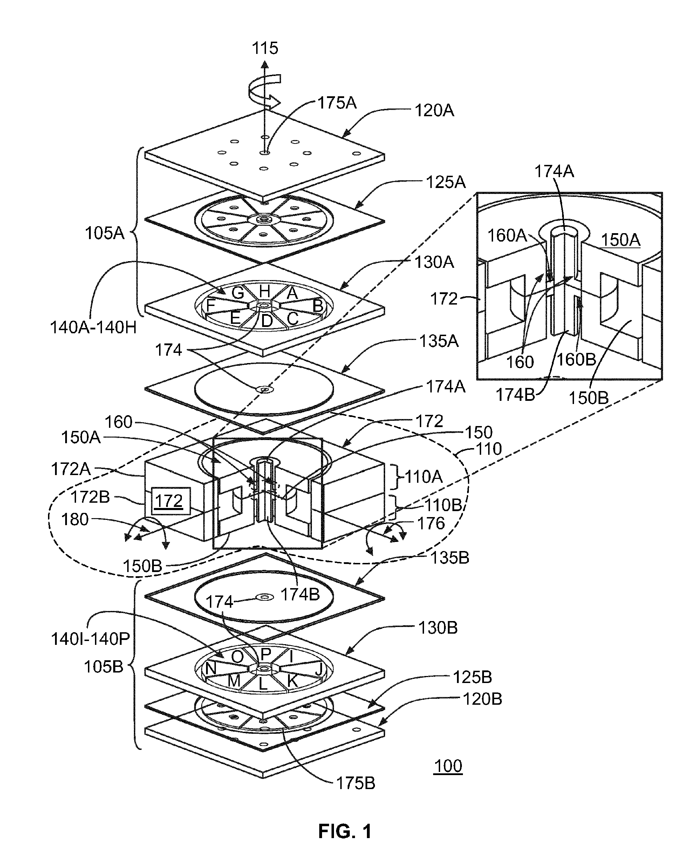

FIGURE 1 is a cutaway exploded view of one implementation of a Class II Coriolis vibratory rocking mode gyroscope (RMG) 100. The RMG 100 comprises a top electrode assembly 105A, a bottom electrode assembly 105B, a top electrode insulator 125A, a bottom electrode insulator 125B, a top resonator insulator 135A, a bottom resonator insulator 135B, and a resonator assembly 110. Preferably, the top electrode insulator 125A is an oxide top electrode insulator 125A. Preferably, the bottom electrode insulator 125B is an oxide bottom electrode insulator 125B. Preferably, the top resonator insulator 135A is a thermally grown top oxide layer 135A. Preferably, the bottom resonator insulator 135B is a thermally grown bottom oxide layer 135B. The RMG 100 is cylindrically symmetrical about the input axis 115.

The top electrode assembly 105A comprises a top cover 120A, a top electrode Insulator 125A, a top guard ring 130A, and a top resonator insulator 135A. Preferably, the top electrode insulator 125A comprises silicon dioxide. Preferably, the top resonator insulator 135A separates the resonator 150 from the top electrodes 140A-140H and establishes the capacitive gap for the top electrodes 140A-140H. Preferably, the top resonator insulator 135A comprises a silicon dioxide layer.

During fabrication, the handle and device layers comprised in the top electrode assembly 105A are patterned and etched, thereby forming the top cover 120A, top electrodes 140A-140H and top guard ring 130A.

The bottom electrode assembly 105B comprises a bottom cover 120B, a bottom Insulator 125B, a bottom guard ring 130B, and a bottom resonator insulator 135B. Preferably, the bottom electrode insulator 125B comprises silicon dioxide. Preferably, the bottom resonator insulator 135B separates the resonator 150 from the bottom electrodes 140I-140P and establishes the capacitive gap for the bottom electrodes 140I-140P. Preferably, the bottom resonator insulator 135B comprises a silicon dioxide layer.

During fabrication, the handle and device layers comprised in the bottom electrode assembly 105B are patterned and etched, thereby forming the bottom cover 120B, bottom electrodes 140I-140P and bottom guard ring 130B.

The device layer of the top electrode assembly 105A comprises eight top electrodes 140A-140H. The eight top electrodes 140A-140H are preferably arranged so as to be separated by approximately equal distances in an approximate circle centered on the input axis 115. During fabrication, the device layer comprised in the top electrode assembly 105A is patterned and etched, thereby forming the eight top electrodes 140A-140H and the top guard ring 130A. The top electrode insulator 125A insulates the top electrodes 140A-140H and the top guard ring 130A from the top cover 120A.

The device layer of the bottom electrode assembly 105B comprises eight bottom electrodes 140I-140P. The eight bottom electrodes 140I-140P are preferably arranged so as to be separated by approximately equal distances in an approximate circle centered on the input axis 115. During fabrication, the device layer comprised in the bottom electrode assembly 105B is patterned and etched, thereby forming the eight bottom electrodes 140I-140P and the bottom guard ring 130B. The bottom electrode insulator 125B insulates the bottom electrodes 140I-140P and the bottom guard ring 130B from the bottom cover 120B.

The resonator assembly 110 comprises a resonator 150, a diaphragm 160, a housing 172, and a center post 174. The resonator 150 comprises a top resonator half 150A and a bottom resonator half 150B. The diaphragm comprises a top diaphragm 160A and a bottom diaphragm 160B. The housing 172 comprises a top housing 172A and a bottom housing 172B. The center post 174 extends from top cover 120A to bottom cover 120B. The center post 174 comprises a top center post section 174A and a bottom center post section 174B.

During fabrication, the resonator 150, the diaphragm 160 and the housing 172 are formed from the resonator assembly 110. The resonator assembly 110 comprises two silicon wafers, a top resonator assembly wafer 110A and a bottom resonator assembly 110B. The top resonator assembly 110A comprises the top resonator insulator 135A, the top resonator half 150A, the top diaphragm 160A, the top housing 172A, and the top center post section 174A. The bottom resonator assembly 110B comprises the bottom resonator insulator 135B, the bottom resonator half 150B, the bottom diaphragm 160B, the bottom housing 172B, and the bottom center post section 174B.

The top resonator assembly wafer 173A and the bottom resonator assembly wafer 173B are each patterned and etched to form half of the resonator assembly 110. The annular gaps separating the resonator 150 from the housing 172 remain un-etched prior to the bonding of the top resonator assembly 173A to the bottom resonator assembly 173B. Following the bonding together of the top resonator assembly 173A and the bottom resonator assembly 173B, the annular gap between the resonator 150 and the top housing 172A is etched. The annular gap between the resonator 150B and the bottom housing 172B remains un-etched. The resonator assembly 110 is direct bonded (also known as fusion bonded) to the top electrode assembly 105A. The annular gap between the resonator 150B and the housing 172B is etched and the resonator assembly 110 and the top electrode assembly 105A are direct bonded to the bottom electrode assembly 105B. This completes the fabrication and assembly of the RMG 100.

A center post 174 runs vertically through the gyroscope 100, connected to the top cover 120A and to the top electrode insulator 125A, passing through the center of the top guard ring 130A and of the top resonator insulator 135A, connected to the diaphragm 160 and to the bottom resonator insulator 135B, passing through the center of the bottom guard ring 130B and of the bottom electrode insulator 125B, and connected to the bottom cover 120B. Preferably, the center post 174 is a center post 174 that is flexible in the portions lying between top insulator 135A and 135B, and is rigid elsewhere. The resonator 150 preferably has a plane configuration. The resonator 150 is preferably a generally cylindrical resonator 150. According to alternative embodiments, the resonator 150 can be a generally rectangular resonator 150. According to alternative embodiments, the resonator 150 can be a generally square resonator 150. According to alternative embodiments, the resonator 150 can have other shapes that are symmetrical about the input axis and that are not generally cylindrical, generally rectangular, or generally square. The housing 172 bonded to the top and bottom electrode assemblies 105A and 105B provides the vacuum enclosure required for a high Q resonance of the resonator 105. The top resonator insulator 135A establishes a capacitive gap between the resonator 150 and the top electrodes 140A-140H and insulates the top guard ring 130A from the housing 172. The bottom resonator insulator 135B establishes a capacitive gap between the resonator 150 and the bottom electrodes 140I-140P and the bottom guard ring 130B from the housing 172.

The resonator 150 is coupled by the diaphragm 160 to the center post 174. Preferably, the center post 174 is bonded to the top cover assembly 105A at a top center post anchor point 175A. Preferably, the center post 174 is bonded to the bottom cover assembly 105B at a bottom center post anchor point 175B. Preferably, the diaphragm 160 is elastic. Preferably, the diaphragm 160 is a diaphragm 160 that supports the resonator 150. Preferably, the diaphragm 160 couples the resonator 150 to the center post 174. Preferably, the center post 174 is elastic. Preferably, the center post 174 and diaphragm 160 flex in approximate synchronization with the resonator 150, vibrating in an axis in the plane of the diaphragm 160. The input axis 115 is orthogonal to the plane of the resonator 150.

The diaphragm 160 accommodates motion of the resonator 150 in a sense axis 176 in the plane of the diaphragm 160. The drive axis 180 in which the drive motion occurs is orthogonal to the sense axis 176 and is also orthogonal to the input axis 115. The rocking mode resonant frequency is determined based on the moment of inertia of the resonator 150 and a spring constant for angular motion of the suspension, that is, of the center post 174 and the diaphragm 160. The resonant frequency for a translational mode of interest is determined based on the mass of the resonator 150 and a spring constant for translational motion of the suspension, that is, of the center post 174 and the diaphragm 160.

Preferably, the diaphragm 160 is coupled to the housing 172 through the center post 174 and the top electrode assembly 105A and bottom electrode assembly 105B. Preferably, the diaphragm 160 is mechanically attached to the housing 172 through the center post 174.

Top electrode assembly 105A comprises top electrodes 140A-140H. Bottom electrode assembly 105B comprises bottom electrodes 140I-140P. Electrodes 140A-140P face the end surfaces of the resonator 150.

Preferably, top electrodes 140A-140H and bottom electrodes 140I-140P each comprise four tuning electrodes. Preferably, top electrodes 140A-140H and bottom electrodes 140I-140P each comprise two pickoff electrodes. Preferably, top electrodes 140A-140H and bottom electrodes 140I-140P each comprise two forcer electrodes.

Alternating top electrodes 140A-140H that comprise tuning electrodes diagonally oppose corresponding alternating bottom electrodes 140I-140P that also comprise tuning electrodes. While the initial naming convention is arbitrary, in this example, top electrodes 140B, 140D, 140F, and 140H comprise tuning electrodes. Similarly, bottom electrodes 140J, 140L, 140N, and 140P comprise tuning electrodes.

DC voltages are applied to the tuning electrodes 140B, 140D, 140F, 140H, 140J, 140L, 140N, and 140P to control and substantially eliminate quadrature. Tuning electrodes 140B, 140D, 140F, 140H, 140J, 140L, 140N, and 140P achieve the substantial elimination of quadrature by introducing an appropriate negative electrostatic spring that causes the resonant frequencies of the two principal elastic axes, and consequently the resonant frequencies of the sense axis 176 and the drive axis 180 to be substantially equal.

Top electrodes 140E and 140G comprise pickoff electrodes, and top electrodes 140A and 140C comprise forcer electrodes. Similarly, bottom electrodes 140I and 140K comprise pickoff electrodes, and bottom electrodes 140M and 1400 comprise forcer electrodes. At least one of the top pickoff electrodes diagonally opposes a bottom pickoff electrode, and at least one of the top forcer electrodes diagonally opposes a bottom forcer electrode. Preferably, each top pickoff electrode diagonally opposes a bottom pickoff electrode, and each top forcer electrode diagonally opposes a bottom forcer electrode. Preferably, one or more of the pickoff electrodes comprises a capacitive pickoff electrode.

While the initial naming convention is arbitrary, in this example, top electrodes 140A and 140C comprise forcer electrodes that respectively diagonally oppose bottom electrodes 140M and 1400, which also comprise forcer electrodes. Top electrodes 140E and 140G comprise pickoff electrodes that respectively diagonally oppose bottom electrodes 140I and 140K, which also comprise pickoff electrodes.

At least one of the forcer electrodes 140,and 140M is coupled to control electronics (not shown) that provides the appropriate voltage so as to keep approximately constant the amplitude of vibration of the resonator 150 in the drive axis 180. Preferably, the control electronics uses electrostatic force to drive the resonator 150 in a rocking mode at approximately the resonant frequency and specific amplitude. For example, the forcer electrodes 140A, 140M, and the control electronics drive the resonator 150 in a rocking mode at the approximate fundamental resonant frequency and specific amplitude by applying a voltage to the forcer electrodes 140A and 140M. A bias voltage of approximately 100 volts is applied to the resonator 150.

At least one of the pickoff electrodes 140E and 140I senses at least one of a phase, a direction, and an amplitude of oscillation of the resonator 150.
At least one of the pickoff electrodes 140E, and 140I, provides information to the control electronics regarding the at least one of a phase, a direction, and an amplitude of oscillation of the resonator 150. Preferably, the control electronics, using the information provided by the at least one pickoff electrode 140E, and 140I, drives the resonator 150 in a rocking mode at the approximate resonant frequency and specific amplitude.

Preferably, the control electronics, using at least one of the direction, and an amplitude of oscillation of the resonator 150 as provided by at least one of the pickoff electrodes 140G and 140K to which the control electronics is coupled, provides instructions to one or more of the tuning electrodes 140B, 140D, 140F, 140H, 140J, 140L, 140N, and 140P as to the signal to be applied so as to substantially null the amplitude of the quadrature component in the orthogonal vibration mode in the sense axis 176.

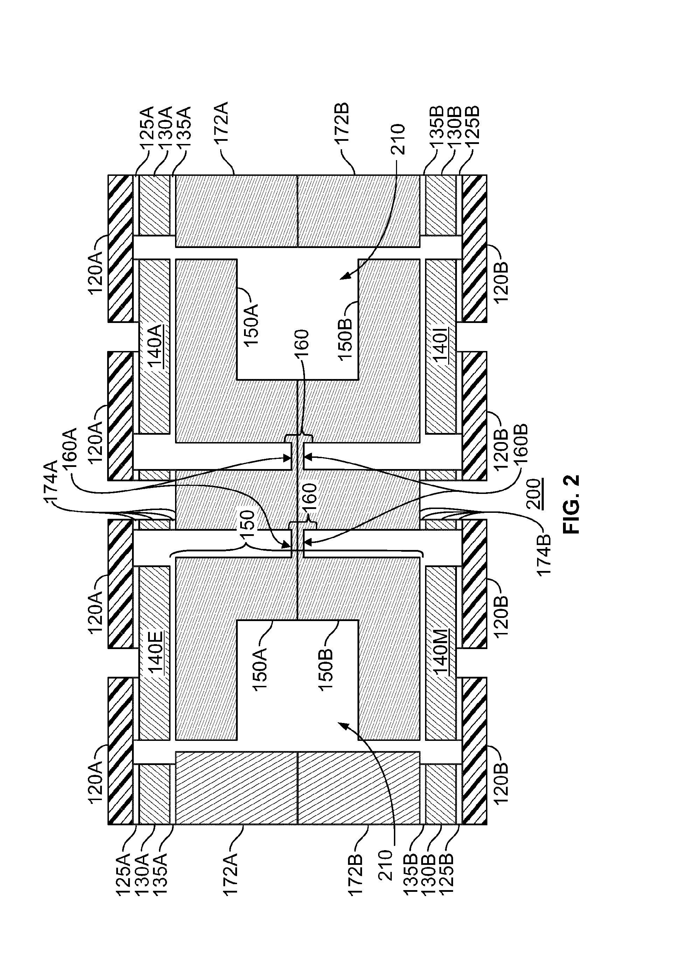

FIGURE 2 is a view of a cross section 200 along the drive axis 180 of one implementation of the resonant drive of a Class II Coriolis vibratory rocking mode gyroscope 100. Depicted are diagonally opposed forcer electrodes 140A and 140M, and diagonally opposed pickoff electrodes 140E and 140I. Material is removed from the resonator 150 to create the cylindrical volume 210 without substantially affecting the functioning of the device because it contributes little to the Coriolis forces that couple energy between the drive axis 180 and sense axis 176.

Also depicted in FIGURE 2 are the top cover 120A, the bottom cover 120B, the top electrode insulator 125A, the bottom electrode insulator 125B, the top guard ring 130A, the bottom guard ring 130B, the top resonator insulator 135A, the bottom resonator insulator 135B, the top resonator half 150A, the bottom resonator half 150B, the top diaphragm 160A, the bottom diaphragm 160B, the top housing 172A, the bottom housing 172B, the top center post section 174A, and the bottom center post section 174B.

A capacitor is formed between forcer electrode 140A and the resonator 150. Similarly, a capacitor is formed between forcer electrode 140M and the resonator 150. A capacitor is formed between pickoff electrode 140E and the resonator 150. Similarly, a capacitor is formed between pickoff electrode 140I and the resonator 150.

Forcer electrodes 140A and 140M receive a drive signal from the control electronics (not pictured) directing them as to how to drive the resonator 150 at a frequency substantially equal to its fundamental natural frequency and at a fixed amplitude.

The resonator 150 is connected through the diaphragm 160 to the central post 174, which has a substantially non-zero potential. The oscillation of the resonator 150 generates pickoff signals in the pickoff electrodes 140E and 140I, which transmit the pickoff signal to the control electronics. The pickoff signals provide the control electronics with information regarding the frequency, phase, and amplitude of the motion of the resonator 150. The change in resonant frequency of the resonator 150 as the temperature changes can be calibrated according to embodiments of the invention and used to apply a thermally modeled correction to adjust for varying temperature of the gyroscope 100.

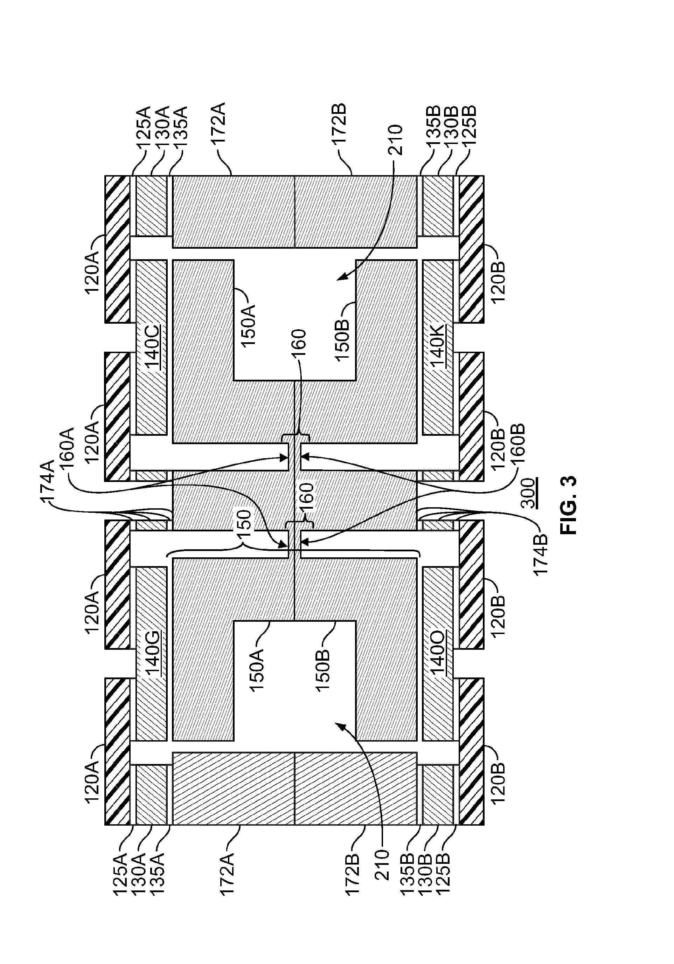

FIGURE 3 is a view of a cross section 300 along the sense axis 176 of the resonator 150 of one implementation of a Class II Coriolis vibratory rocking mode gyroscope 100. Depicted are diagonally opposed forcer electrodes 140C and 1400, and diagonally opposed pickoff electrodes 140G and 140K. A cylindrical volume 210 is removed from the resonator 150. The material removed to create the cylindrical volume 210 can safely be removed without substantially affecting the functioning of the device because it contributes little to the Coriolis forces that couple energy between the drive axis 180 and the sense axis 176.

Also depicted in FIGURE 3 are the top cover 120A, the bottom cover 120B, the top electrode insulator 125A, the bottom electrode insulator 125B, the top guard ring 130A, the bottom guard ring 130B, the top resonator insulator 135A, the bottom resonator insulator 135B, the top resonator half 150A, the bottom resonator half 150B the top diaphragm 160A and the bottom diaphragm 160B,and the top housing 172A, the bottom housing 172B, the top center post section 174A, and the bottom center post section 174B.

A capacitor is formed between forcer electrode 140C and the resonator 150. Similarly, a capacitor is formed between forcer electrode 1400 and the resonator 150. A capacitor is formed between pickoff electrode 140G and the resonator 150. Similarly, a capacitor is formed between pickoff electrode 140K and the resonator 150.

Forcer electrodes 140C and 1400 receive a drive signal from the control electronics (not pictured) directing them as to how to substantially null the amplitude of the sense mode of the resonator 150.

The resonator 150 is connected through the diaphragm 160 to the central post 174, which has a substantially non-zero potential. The oscillation of the resonator 150 generates pickoff signals in the pickoff electrodes 1 140G and 140K, which transmit the pickoff signal to the control electronics. The pickoff signals provide the control electronics with information regarding the frequency, phase, and amplitude of the motion of the resonator 150. The change in resonant frequency of the resonator 150 as the temperature changes can be calibrated according to embodiments of the invention and used to apply a thermally modeled correction to adjust for varying temperature of the gyroscope 100.

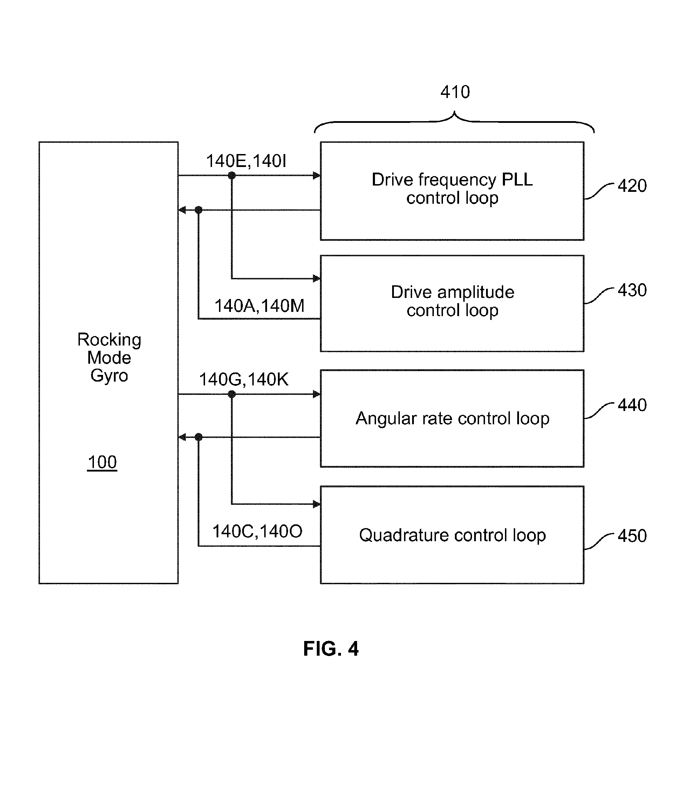

FIGURE 4 is a simplified block diagram of the closed-loop control electronics 410 for the rocking mode gyroscope 100. The control electronics 410 comprises four servo loops 420, 430, 440, and 450.

Servo loop 420 is a drive frequency PLL 420. Drive frequency PLL 420 ensures that the resonator 150 oscillates at substantially its fundamental resonant frequency.

Servo loop 430 is a drive amplitude control loop 430. Drive amplitude control loop 430 maintains a substantially constant amplitude of motion of the resonator 150.

Servo loop 440 is an angular rate control loop 440. Angular rate control loop 440 provides a measurement of the angular rate of rotation of the rocking mode gyroscope 100 about the input axis 115.

Servo loop 450 is a quadrature control loop 450. Quadrature control loop 450 provides a measurement of the magnitude of quadrature.

Pickoff electrodes 140E and 140I are coupled to the drive frequency 420 and drive amplitude 430 control loops which provide feedback to the resonator 150 of the rocking mode gyroscope 100 to drive frequency PLL control loop 420 and to drive amplitude control loop 430. The pickoff signals from the pickoff electrodes 140E and 140I are demodulated and separated into their sine and cosine components.

The pickoff signals are demodulated and amplified with proportional and integral gain. The outputs of the drive frequency PLL 420 control loop and of the drive amplitude control loop 430 are then applied to the forcer electrodes 140A and 140M. The forcer electrodes 140A and 140M receive the appropriate drive signal from the drive frequency PLL control loop 420 and from the drive amplitude control loop 430. Using these drive signals, the forcer electrodes 140A and 140M drive the resonator 150 at a frequency substantially equal to its fundamental natural frequency and at a fixed displacement amplitude.

Pickoff electrodes 140G and 140K are coupled to the angular rate control loop 440 and the quadrature control loop 450 which provide feedback to the resonator 150 of the rocking mode gyroscope 100. The pickoff signals from the pickoff electrodes 140G and 140K are demodulated and separated into their sine and cosine components. The sine component is transmitted to the quadrature control loop 450 and the cosine component is transmitted to the angular rate control loop 440.

The pickoff signals are amplified with proportional and integral gain by the angular rate control loop 440 and by the quadrature control loop 450. The pickoff signals are modulated by the angular rate control loop 440 and by the quadrature control loop 450 and summed. The summed outputs of the angular rate control loop 440 and of the quadrature control loop 450 are then applied to the forcer electrodes 140C and 1400. The forcer electrodes 140C and 1400 receive the appropriate drive signals from the angular rate control loop 440 and from the quadrature control loop 450. Using these drive signals, the forcer electrodes 140C and 1400 drive the resonator 150 at a frequency substantially equal to its fundamental natural frequency to null the motion in the sense axis 176

While the above representative embodiments have been described with certain components in exemplary configurations, it will be understood by one of ordinary skill in the art that other representative embodiments can be implemented using different configurations and/or different components. For example, it will be understood by one of ordinary skill in the art that the order of certain fabrication steps and certain components can be altered without substantially impairing the functioning of the invention.

For example, the device could comprise an incomplete set of forcer electrodes. For example, one of the four forcer electrodes could be missing. As another example, the device could comprise an incomplete set of pickoff electrodes. For example, one of the four pickoffs 183 could be missing. As another example, top and bottom could be inverted, i.e., the device could be turned upside down. As yet another example, the resonator 150 could be approximately rectangular. As still another example, the resonator 150 could have a shape neither approximately square nor generally cylindrical but could take another shape that is symmetrical about the input axis. For example, the resonator 150 could have a shape that is not generally cylindrical, is not approximately square, and is not approximately rectangular e.g., conical. As another example, the device could comprise an expanded set of electrodes, for example, more electrodes than are shown in Figure 1. These additional possible electrodes may be used, for example, in a forcing and pickoff scheme slightly different than described above.

The representative embodiments and disclosed subject matter, which have been described in detail herein, have been presented by way of example and illustration and not by way of limitation. It will be understood by those skilled in the art that various changes may be made in the form and details of the described embodiments resulting in equivalent embodiments that remain within the scope of the appended claims. For example, it will be understood by one of ordinary skill in the art that the order of certain fabrication steps and certain components can be altered without substantially impairing the functioning of the invention. For example, the top electrode assembly 105A could be bonded to the two resonator assembly wafers 173A and 173B comprised in the resonator assembly 110 prior to the bonding of the bottom electrode assembly 150B to the two resonator assembly wafers 173A and 173B.

Although example implementations of the invention have been depicted and described in detail herein, it will be apparent to those skilled in the relevant art that various modifications, additions, substitutions, and the like can be made without departing from the spirit of the invention and these are therefore considered to be within the scope of the invention as defined in the following claims.

## Claims

1. A resonator gyroscope, comprising:
a central post;
a resonator coupled to the central post; and
a diaphragm coupled to the resonator,
wherein at least one of the central post and the diaphragm accommodates motion of the resonator in an axis in a plane of the diaphragm.

2. The gyroscope of claim 1, wherein the resonator is generally cylindrical.

3. The gyroscope of claim 1 or claim 2, wherein the diaphragm couples the resonator to the central post, or wherein the diaphragm couples the resonator to the central post and wherein the diaphragm is elastic.

4. The gyroscope of any preceding claim, wherein the central post is elastic and fixed to a case or wherein the central post is elastic and fixed to a case comprising at least one of a top cover and a bottom cover.

5. The gyroscope of claim 4, where the case comprises at least one of the top cover and the bottom cover and wherein one or more electrodes are comprised in at least one of the top cover and the bottom cover.

6. The gyroscope of claim 5, wherein one or more of the following applies:
a) at least one of the electrodes is coupled to control electronics,
b) the electrodes are approximately equally spaced around at least one of the top cover and the bottom cover,
c) at least one of the one or more electrodes are dielectrically isolated, and
d) at least one of the one or more electrodes faces an end surface of the resonator.

7. The gyroscope of claim 5, wherein at least one of the electrodes comprises at least one of a tuning electrode, a pickoff electrode and a forcer electrode.

8. The gyroscope of claim 7, wherein at least one of the following applies:
a) the tuning electrodes alternate around at least one of the top cover and the bottom cover,
b) at least one of the top cover and the bottom cover comprises four forcer electrodes,
c) at least one forcer electrode diametrically opposes a pickoff electrode.

9. The gyroscope of claim 7, wherein at least one forcer electrode diametrically opposes a pickoff electrode and wherein at least one of the pickoff electrodes is coupled to control electronics.

10. The gyroscope of claim 9, wherein the control electronics, using information provided by the at least one pickoff electrode to which it is coupled, drives the resonator in a rocking mode.

11. The gyroscope of claim 10, wherein the control electronics, using the information provided by the at least one pickoff electrode to which it is coupled, provides feedback to at least one of the forcer electrodes to drive the resonator in a rocking mode at an approximate rocking mode resonant frequency.

12. The gyroscope of claim 11, wherein the control electronics, using electrostatic force and the information provided by the at least one pickoff electrode to which it is coupled, provides feedback to at least one of the forcer electrodes to drive the resonator in a rocking mode at an approximate rocking mode resonant frequency and specific amplitude.

13. The gyroscope of claim 12, wherein the resonator is driven at:
a) approximately the resonator's fundamental rocking mode resonant frequency,
b) an approximate harmonic of the fundamental rocking mode resonant frequency, or
c) an approximate sub-harmonic of the fundamental rocking mode resonant frequency.

14. The gyroscope of any preceding claim, wherein the gyroscope is operated in closed-loop mode.

15. The gyroscope of claim 9, wherein the control electronics comprises one or more of a drive frequency phase lock loop (PLL), a drive amplitude control loop, a quadrature control loop, and an angular rate control loop.

16. The gyroscope of claim 7, wherein at least one of the top cover and the bottom cover comprises four pickoff electrodes, or
wherein at least one of the top cover and the bottom cover comprises four pickoff electrodes and wherein at least one of the pickoff electrodes senses at least one of a phase, a direction, and amplitude of oscillation of the resonator.

17. The gyroscope of claim 7, wherein at least one of the pickoff electrodes is coupled to control electronics, or
wherein at least one of the pickoff electrodes is coupled to control electronics and wherein at least one of the pickoff electrodes coupled to the control electronics provides the servo with at least one of a phase, a direction, and amplitude of oscillation of the resonator.

18. The gyroscope of claim 7, wherein at least one of the pickoff electrodes is coupled to control electronics and wherein at least one of the pickoff electrodes coupled to the control electronics provides the servo with at least one of a phase, a direction, and amplitude of oscillation of the resonator and wherein the control electronics, using electrostatic force and information provided by the at least one pickoff electrode to which it is coupled, substantially nulls the amplitude of a sense mode orthogonal to the driven rocking mode.

19. The gyroscope of claim 18, wherein the at least one pickoff electrode receives a pickoff signal that the control electronics divides into sine and cosine components with relation to the phase of the drive axis.

20. The gyroscope of claim 19, wherein the sine and cosine components are used to substantially null both the angular rate and the quadrature motions of the resonator, thereby substantially nulling the amplitude of the sense mode.

21. The gyroscope of any preceding claim, wherein the central post flexes in approximate synchronization with the resonator.

22. The gyroscope of claim 1, wherein the gyroscope is capable of self-calibration.

23. The gyroscope of any one of claims 1 to 3, wherein the central post is elastic and fixed to a case and wherein the diaphragm is coupled to the case through the center post.

24. The gyroscope of any one of claims 1-13 or claims 15-23, wherein the gyroscope may be operated in open loop mode.

25. The gyroscope of any one of claims 1 to 23, wherein the gyroscope may be operated in closed loop mode.

26. A resonator gyroscope, comprising:
a central post;
a generally cylindrical resonator coupled to the central post;
a diaphragm coupled to the resonator;
a first forcer component that causes a first oscillation of the resonator;
a first pickoff component that senses a second oscillation in an axis in the plane of the diaphragm, wherein the second oscillation is induced in the resonator by a Coriolis force on the resonator,
wherein the second oscillation is substantially orthogonal to the first oscillation;
a second forcer component that causes the second oscillation to be substantially nulled; and
a second pickoff component that senses the amplitude of the second oscillation.

27. The apparatus of claim 26, wherein at least one of the following applies:
a) the pickoff component senses the second oscillation to measure the amplitude of the oscillating resonator,
b) the first oscillation comprises a drive oscillation in a drive direction, and wherein the second oscillation comprises a Coriolis force-induced oscillation in a sense direction, and
c) the first forcer component measures at least one of an amplitude of oscillation and a phase of oscillation, wherein the first pickoff component substantially nulls the amplitude of the second oscillation.

28. A resonator gyroscope, comprising:
a case comprising at least one of a top cover and a bottom cover;
an elastic central post fixed to the case;
a generally cylindrical resonator coupled to the central post, wherein the resonator is enclosed in the case;
a diaphragm that couples the resonator to the central post,
wherein at least one of the top cover and the bottom cover comprises eight electrodes that are approximately equally spaced, wherein at least one of the electrodes is coupled to control electronics configured to drive the resonator in a rocking mode, wherein the control electronics is further configured to substantially null the amplitude of a sense mode orthogonal to the rocking mode,
wherein the central post and diaphragm accommodates motion of the resonator in an axis in a plane of the diaphragm.
